**Europäisches Patentamt**

**European Patent Office**

**Office européen des brevets**

(19)

(11) Veröffentlichungsnummer: **0 122 597 B1**

(12) **EUROPÄISCHE PATENTSCHRIFT**

(45) Veröffentlichungstag der Patentschrift: **20.02.91**

(51) Int. Cl.⁵: **H01S 3/03, H01S 3/097**

(21) Anmeldenummer: **84104085.0**

(22) Anmeldetag: **11.04.84**

(54) Transversal angeregter Gaslaser.

(30) Priorität: **15.04.83 DE 3313811**

(43) Veröffentlichungstag der Anmeldung:
**24.10.84 Patentblatt 84/43**

(45) Bekanntmachung des Hinweises auf die
Patenterteilung:
**20.02.91 Patentblatt 91/08**

(84) Benannte Vertragsstaaten:
**BE CH DE FR GB IT LI NL SE**

(56) Entgegenhaltungen:
**EP-A- 0 048 407**
**DE-A- 2 051 734**
**US-A- 4 088 965**

**JOURNAL OF APPLIED PHYSICS, Band 44,
Nr. 9, September 1973, Seiten 4125-4136,
American Institute of Physics, New York, US;
L.J. DENES et al.: "Laser gain characterization of near-atmospheric CO2:N2:He glows in
a planar electrode geometry"**

**INSTRUMENTS & EXPERIMENTAL TECHNI-
QUES, Band 19, Nr. 6/2, November/Dezember
1976, Seiten 1756,1757, New York, US; YU.A.
RUBINOV et al.: "Carbon-dioxide laser with
transverse excitation and preliminary photoionization"**

**"Optics Communication" Bd. 44, NO. 2, 1982,
Seiten 125 - 129**

(73) Patentinhaber: **Siemens Aktiengesellschaft
Wittelsbacherplatz 2
D-8000 München 2(DE)**

(72) Erfinder: **Brumme, Gerhard, Dr., rer. nat.
Dipl.-Phys.
Am Lochfeld 25
D-8088 Eching a.A.(DE)**
Erfinder: **Grage, Ludger, Dipl.-Ing.
Frühlingstrasse 46
D-8031 Eichenau(DE)**
Erfinder: **Heynisch, Hinrich, Dr., rer. nat.
Dipl.-Phys.
Im Birket 7
D-8032 Gräfelfing(DE)**
Erfinder: **Hübner, Erwin, Dr., rer. nat.
Breitensteinstrasse 2
D-8018 Grafing(DE)**

## Beschreibung

Die Erfindung bezieht sich auf einen Gaslaser gemäß dem Oberbegriff des Anspruchs 1. Ein solcher Laser ist aus der DE-OS 30 35 730 bekannt.

TE( t ransversly e xited)-Laser erreichen bekanntlich nur dann ihre volle Leistung, wenn zwischen den beiden parallel zur optischen Achse erstreckten Elektroden eine großvolumige, homogene Entladung zustandekommt. Dementsprechend muß man vor allem dafür sorgen, daß sich im Entladungsraum keine Feldkonzentrationen bilden können und daß vor Jeder Entladung bereits genügend freie Elektroden vorhanden sind.

Um diese Bedingungen zu erfüllen, wird in der eingangs zitierten Literaturstelle u.a. folgendes Elektrodensystem vorgeschlagen: Zwei langgestreckte, massive Hauptelektroden sind zur jeweiligen Gegenelektrode hin vorgewölbt und an ihren Außenflanken jeweils mit einer stabförmigen, dielektrisch umhüllten Hilfselektrode versehen. Die Anordnung ist dabei so getroffen, daß im Betrieb des Lasers zunächst zwischen den Hauptelektroden und den ihnen zugeordneten Hilfselektroden eine Koronaentladung stattfindet. Diese Entladung erzeugt UV-Licht, das seinerseits die Gasfüllung ionisiert und dadurch die Hauptentladung einleitet. Eine solche Elektrodenkonfiguration läßt sich relativ einfach realisieren, verlangt allerdings, daß zusammengehörige Elektroden in Form und Lage exakt aufeinander abgestimmt sind. Es hat sich außerdem gezeigt, daß der Ionisierungseffekt nicht immer ausreichend ist, um auch bei erhöhten Gasdrücken und relativ geringen Spannungen eine Bogenentladung sicher ausschließen zu können.

Die Ionisierungswirkung ließe sich durch Modifikationen in der Elektrodengeometrie wohl noch verbessern. So könnte man, wie dies in der US-PS 42 40044 diskutiert wird, die Hilfselektrode näher an den Scheitelpunkt der gekrümmten Hauptelektrodenfläche heranrücken und zusätzlich in eine muldenförmige Vertiefung der Hauptelektrode einlassen. Diesen Versuchen sind allerdings enge Grenzen gesetzt, denn es dürfen die Bedingungen für die Hauptentladung selbst nicht wesentlich verschlechtert werden.

Gute Resultate erhält man mit Hilfselektroden in Form von Platten, die die beiden offenen Seiten des von den Hauptelektroden definierten Raums (Hauptentladungsraum) abschließen und innenseitig durch eine weitere isolierende Platte abgedeckt werden (Optics Communications 44 (1982) 125). Bei richtiger Dimensionierung überzieht eine Koronaentladung die gesamte Plattenoberfläche und bildet somit eine großflächige UV-Quelle. Unbefriedigend ist allerdings, daß die optimale Plattendicke empfindlich von der Geometrie der Hauptelektroden und überdies auch von der Art und dem Druck des Gases abhängt. Ist die Platte zu dünn, so entstehen Gleitfunken längs des Isolators, und bei zu dicker Platte verringert sich die in die Koronaentladung übertragbare Energie, d.h. die Ionisation ist nicht ausreichend. Insofern kommt man auch hier nicht umhin, eine Reihe von Laserparametern genau aufeinander abzustimmen. Weitere Schwierigkeiten sind zu erwarten, wenn der Laser mit einer abgeschlossenen Entladungskammer arbeitet ("Sealed-off-Laser"), denn in diesem Fall ändern sich mit der Zeit die Partialdrücke der einzelnen Gasbestandteile absolut und relativ. Ein weiterer Nachteil ist, daß die Platten den für eine hohe Impulsfolge erforderlichen Gasaustausch zwischen dem Hauptentladungsraum und seiner Umgebung stark behindern.

Aus Journal of applied physics, Vol. 44, No.9, Sept. 1973, S.4125-4136 ist ein $CO_2$-Laser bekannt, welcher Hauptelektroden enthält, die eine Entladungsstrecke einschließen, und mehrere Paare von Rutilstäben als Zündelektroden, wobei die Rutilstäbe senkrecht zur Richtung der Entladungsstrecke ausgerichtet sind und außerhalb der Entladungsstrecke befindliche Zündspalte einschließen. Die Rutilstäbe müssen eine elektrische Leitfähigkeit besitzen, damit eine Glimmentladung im Zündspalt entstehen kann. Die elektrische Leitfähigkeit unterliegt großen Streuungen, da sie von Verunreinigungen des sonst nichtleitenden Rutils herrührt. Daher ist ein aufwendiger Abgleich der Widerstandswerte der einzelnen Paare von Zündelektroden erforderlich, um eine sichere und gleichmäßige Zündung zu erreichen. Außerdem können geringe Unterschiede in Dicken der Zündspalte zur Konzentration der Zündentladung auf wenige Spalte führen, eine exakte mechanische Justierung ist erforderlich.

Der Erfindung liegt die Aufgabe zugrunde, einen Gaslaser der eingangs genannten Art mit einer Vorionisierungseinrichtung auszustatten, die sich rationell fertigen und einbauen läßt, eine relativ freie Wahl bei den Hauptelektroden, dem Gasdruck, der Gasbeschaffenheit und der Spannung läßt und sich nicht zuletzt auch für Sealed-off-Laser mit rascher Pulsfolge eignet. Diese Aufgabe wird erfindungsgemäß durch eine Laserausführung mit den Merkmalen des Anspruchs 1 gelöst.

Der Hilfselektrodenteil eines erfindungsgemäßen Lasers arbeitet weitgehend autonom, weil die Koronaentladung erstmals nicht zu einer der Hauptelektroden hin brennt, sondern direkt zwischen den Hilfselektroden stattfindet. Die Hilfselektrodenpaare lassen sich dabei so plazieren, daß es in allen wesentlichen Bereichen des Hauptentladungsraumes zu einer kräftigen Ionisierung kommt und die anschließende Hauptentladung homogen erfolgen kann. Das gilt vor allem dann, wenn mehrere Hilfselektrodenpaare zu beiden Seiten der optischen Achse, und zwar außerhalb des Hauptentladungsraumes, vorgesehen sind. In diesem Fall wird nämlich das UV-Licht in ausgedehnten, günstig positionierten Bereichen erzeugt und darüberhinaus auch noch das elektrische Feld an den Rändern der Hauptentladungsstrecke positiv beeinflußt. Die Hilfselektroden, die sich jeweils auf einer Seite des Hauptentladungsraumes befinden, lassen sich baulich zu einem einzigen, leicht zu montierenden Teil zusammenfassen und könnten bei Bedarf auch ohne weiteres in die Gefäßwandung integriert werden. Auch der Schaltungsaufwand ist denkbar gering: Die Energieversorgung für die Haupt- und Hilfselektroden erfolgt aus einer Quelle, wobei es im allgemeinen ausreicht, die Hilfselektroden parallel zu den Hauptelektroden zu schalten. Der Energieinhalt der Koronaentladung wird dabei allein durch die Auslegung der Hilfselektrodenpaare bestimmt. Ein erfindungsgemäß ausgebildeter Sealed-off-Laser zeigt eine relativ konstante Ausgangsleistung und ermöglicht überdies eine hohe Pulsfolgefrequenz, da der Entladungsraum auf seiner ganzen Länge großflächig mit dem Ballastraum kommunizieren kann und so für eine rasche Regeneration des Gases der Entladungsstrecke - eine wesentliche Voraussetzung für kurze Pulsabstände - sorgt.

Der vorliegende Gaslaser bietet sich vor allem für Laserentfernungsmeßgeräte im mobilen Einsatz an.

Weitere vorteilhafte Ausgestaltungen und Weiterbildungen der Erfindung sind Gegenstand zusätzlicher Ansprüche.

Der Lösungsvorschlag soll nun anhand mehrerer Ausführungsbeispiele näher erläutert werden. In den Figuren sind einander entsprechende Teile mit gleichen Bezugszeichen versehen.

Es zeigen:

Fig. 1    ein erstes Ausführungsbeispiel in einem Querschnitt,

Fig. 2    von diesem Beispiel die Betriebsschaltung,

Fig. 3    ein weiteres Ausführungsbeispiel, in der gleichen Darstellungsweise wie Fig. 1, und

Fig. 4    ein drittes Ausführungsbeispiel, ebenfalls im Querschnitt.

Die Figuren sind der Übersicht halber sehr schematisch gehalten. Für ein Verständnis der Erfindung nicht unbedingt erforderliche Einzelteile, beispielsweise die optischen Abschlußelemente, sind nicht dargestellt.

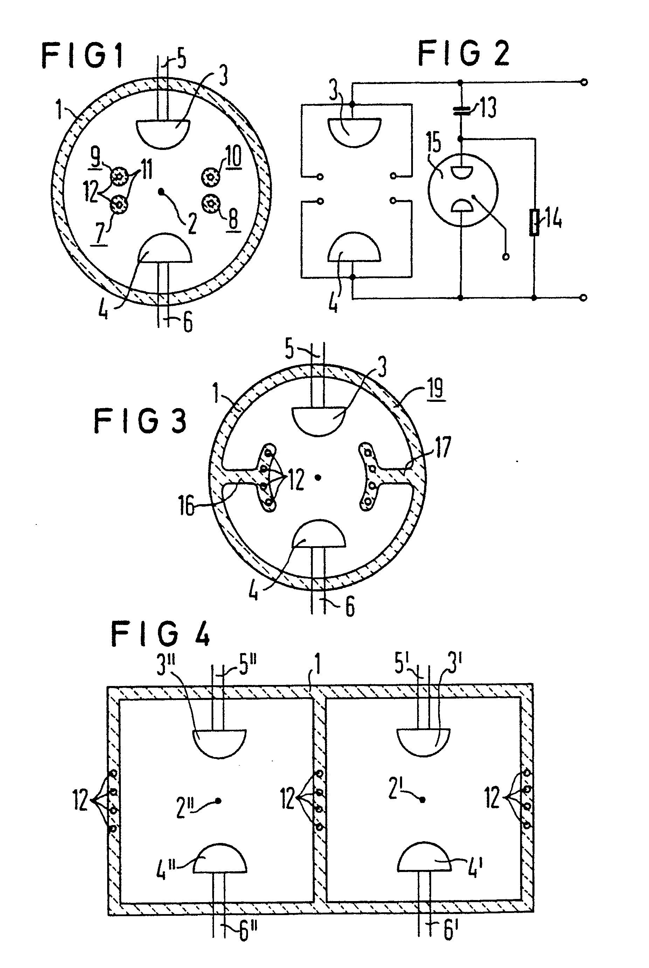

Der Laser der Fig. 1 ist ein gepulster TE-Gaslaser, der beispielsweise zur Entfernungsmessung eingesetzt werden könnte. Er enthält ein zylindrisches Entladungsgefäß 1, das an seinen beiden Stirnseiten durch (nicht eingezeichnete) Resonatorspiegel abgeschlossen ist. Beide Spiegel definieren die optische Achse des Lasers, die in der Figur durch den Punkt 2 symbolisiert wird. Oberhalb und unterhalb dieser Achse sind Elektroden (Hauptkathode 3, Hauptanode 4) angeordnet. Diese Elektroden nehmen fast die gesamte Länge des Laserrohres ein und verlaufen - mit vorgegebenem Abstand - zueinander parallel. Die Elektrodenoberflächen sind in an sich bekannter Weise vorgewölbt, so daß im Raum zwischen den Elektroden möglichst keine Feldinhomogenitäten auftreten. Durch die Gefäßwand geführte Zuleitungen 5, 6 verbinden die Elektroden mit einem (nicht dargestellten) Stromkreis. Links und rechts der Achse 2 befinden sich jeweils eine Hilfskathode 7 bzw. 8 sowie eine Hilfsanode 9 bzw. 10. jede dieser Hilfselektroden besteht aus einem parallel zur Achse 2 sich erstreckendem dielektrischen Hohlzylinder 11, - dessen Innenwandung von einem elektrischen Leiter 12 ausgekleidet ist. Der vom Entladungsgefäß 1 umschlossene Hohlraum ist mit einer Lasergasmischung gefüllt.

Für die einzelnen Laserteile sind folgende Materialien und Abmessungen vorgesehen:

Das Gefäß 1 besteht aus $Al_2O_3$, hat eine Länge von etwa 25 cm und einen Innendurchmesser von ca. 10 cm. Die beiden Hauptelektroden sind aus CrNi -Stahl gefertigt. Die Hilfselektroden 7, 8, 9 und 10 bestehen z.B. aus innen metallisierten $Al_2O_3$-Profilen. Die Gasbestandteile für einen $CO_2$-Gaslaser sind z.B. $CO_2$, $N_2$ und He, gemischt im Verhältnis 15:15:70 und mit einem Gesamtdruck von 1000 mbar.

In Fig. 2 ist dargestellt, wie die Betriebsschaltung für den Laser in einem besonders einfachen Fall aussehen kann: Ein Kondensator 13 ist über eine triggerbare Funkenstrecke 15 mit den Hauptelektroden 3 und 4 verbunden. Die Hilfselektroden liegen parallel zu den Hauptelektroden. Ein Widerstand 14 dient zur Potentialverbindung.

Mit einer erfindungsgemäßen Anordnung wurden bereits Wirkungsgrade über 10 % erreicht.

Die Figuren 3 und 4 zeigen abgewandelte Ausführungsformen. Der Laser der Fig. 3 unterscheidet sich von dem Beispiel der Fig. 1 vor allem darin, daß zu beiden Seiten der optischen Achse jeweils zwei Hilfselektrodenpaare angeordnet sind daß die beiden Paare jeweils eine gemeinsame dielektrische Hülle 16,17 haben und daß Gefäß und Hüllen zusammen ein Formstück 18 bilden. Benachbarte Hilfselektroden stehen abwechselnd mit der Hauptkathode bzw. der Hauptanode in Kontakt, und zwar so, daß die beiden obersten Leiter auf die untere Hauptelektrode und die beiden untersten Leiter auf die obere Hauptelektrode geführt sind.

Der Laser der Fig. 4 hat eine einmal gefaltete optische Achse (2', 2"). In der Figur erkennt man zwei nebeneinanderliegende, durch eine Zwischenwand voneinander getrennte Hauptelektrodenpaare (3', 4'; 3", 4"). In die Zwischenwand sowie in die beiden gegenüberliegenden Außenwände der Entladungskammern sind je zwei Hilfselektrodenpaare integriert. Die Hilfselektroden der Zwischenwand erzeugen an beiden Wandseiten Koronaentladungen.

Die Erfindung ist nicht auf die dargestellten Ausführungsbeispiele beschränkt. Da es in erster Linie nur darauf ankommt, im Hilfselektrodenteil brauchbare Koronaentladungen zustande zu bringen, bleibt vor allem in konstruktiver Hinsicht noch ein erheblicher Spielraum. So ist es etwa ohne weiteres möglich, den Hauptelektroden andere Profile zu geben, die Hilfselektroden massiv auszubilden, für das Entladungsgefäß ein elektrisch leitendes Material zu verwenden oder in die Anordnung Asymmetrien hineinzubringen. Davon abgesehen bleibt es dem Fachmann unbenommen, den Entladungsschaltkreis mit einfachen Mitteln - etwa einem LC-Glied - so zu erweitern, daß die Hauptentladung gegenüber der vorausgehenden Koronaentladung definiert verzögert wird. Im übrigen kommen auch andere Lasertypen, beispielsweise Excimer-Laser, in Frage.

**Ansprüche**

1. Transversal angeregter Gaslaser, insbesondere TEA-Laser, enthaltend
   1) eine langgestreckte, gasgefüllte Entladungskammer (1) mit
      a) zwei optischen Abschlußelementen, die sich an den beiden Kammerstirnseiten befinden und auf einer gemeinsamen Achse, der optischen Achse (2), liegen,
      b) zwei im Kammerinneren plazierte Elektroden, nämlich eine Hauptkathode (3) und eine, Hauptanode (4), die sich längs der optischen Achse erstrecken, und zwar derart, daß diese Achse in dem Hauptentladungsraum zwischen der Hauptkathode und Hauptanode verläuft,
      c) mindestens zwei im Kammerinneren angeordneten Hilfselektroden (7 bis 10), die sich im Bereich mindestens einer beiden offenen Seiten des Hauptentladungsraumes parallel zur optischen Achse erstrecken und jeweils aus einem von einem dielektrischen Mantel (11) umgebenen Leiter (12) bestehen;
   2) eine Ansteuereinheit, mit der im Betrieb des Gaslasers
      a) die Hauptkathode und die Hauptanode auf derart unterschiedliche Potentiale gelegt werden, daß zwischen ihnen eine elektrische Entladung, die Hauptentladung, erfolgt,
      b) die Hilfselektroden auf derartige Potentiale gelegt werden, daß von ihnen eine das Gas des Hauptentladungsraumes vorionisierende Entladung ausgeht; **dadurch gekennzeichnet, daß**
      3) a) die Hilfselektroden, nämlich mindestens eine Hilfskathode (7,8) und mindestens eine Hilfsanode (9 bzw. 10), einander derart angenähert sind und im Betrieb des Gaslasers auf voneinander derart verschiedene Potentiale gelegt werden, daß eine Koronaentladung zwischen diesen beiden Hilfselektroden stattfindet,
      b) die jeweils einer der beiden offenen Seiten des Hauptentladungsraumes befindlichen Hilfselektroden (7, 9 und 8, 10) einen gemeinsamen dielektrischen Mantel (16, 17) haben.

2. Gaslaser nach Anspruch 1, **dadurch gekennzeichnet**, daß die Hilfskathoden (7, 8) mit der einen und die Hilfsanoden (9, 10) mit der anderen der beiden Hauptelektroden (3, 4) elektrisch verbunden sind.

3. Gaslaser nach einem der Ansprüche 1 bis 2, **dadurch gekennzeichnet**, daß sich im Bereich der beiden offenen Seiten des Hauptentladungsraums jeweils mindestens ein aus einer Hilfsanode (9, 10) und einer Hilfskathode (7, 8) gebildetes Hilfselektrodenpaar befindet.

4. Gaslaser nach einem der Ansprüche 1 bis 3, **dadurch gekennzeichnet**, daß der gemeinsame dielektrische Mantel (16, 17) auf seiner dem Hauptentladungsraum zugewandten Seite ein konkaves Profil hat.

5. Gaslaser nach einem der Ansprüche 1 bis 4, **dadurch gekennzeichnet**, daß die Hilfselektroden (7, 8, 9, 10) in die Seitenwand der Entladungskammer (1) integriert sind.

6. Gaslaser nach einem der Ansprüche 1 bis 5, **dadurch gekennzeichnet**, daß dann, wenn im Bereich einer der beiden offenen Seiten des Hauptentladungsraums mehrere Hilfselektrodenpaare vorhanden sind, die einzelnen Hilfselektroden (7, 9, 8, 10) alternierend als Hilfskathode bzw. Hilfsanode dienen.

7. Gaslaser nach einem der Ansprüche 1 bis 6, **dadurch gekennzeichnet**, daß die Hilfselektroden (7, 8, 9, 10) jeweils mit einer der Hauptelektroden (3, 4) elektrisch direkt verbunden sind.

**8.** Gaslaser nach einem der Ansprüche 1 bis 7, **dadurch gekennzeichnet,** er mindestens zwei nebeneinanderliegende Hauptelektrodenpaaren, enthält daß zwischen zwei benachbarten Hauptelektrodenpaaren (3', 4' und 3", 4") jeweils mindestens ein Hilfselektrodenpaar angeordnet ist und daß dieses Paar zur Vorionisation des Gases beider Hauptentladungsräume dient.

**9.** Gaslaser nach einem der Ansprüche 1 bis 8, **dadurch gekennzeichnet,** daß die Hauptelektroden (3, 4) bezüglich einer ersten Ebene spiegelsymmetrisch zueinander und die Hilfselektroden (7, 8, 9, 10) bezüglich einer zweiten, auf der ersten Ebene senkrecht stehenden Ebene spiegelsymmetrisch zueinander geformt und angeordnet sind.

**Claims**

**1.** Transversally excited gas laser, particularly a TEA laser containing
1) an elongated gas-filled discharge chamber (1) having
a) two optical terminating elements which are located at both chamber end faces and are located on a common axis, the optical axis (2),
b) two electrodes placed in the interior of the chamber, namely a main cathode (3) and a main anode (4) which extend along the optical axis, in such a manner that this axis extends in the main discharge space between the main cathode and the main anode,
c) at least two auxiliary electrodes (7 to 10) which are arranged in the interior of the chamber and which extend in the area of at least one of the two open sides of the main discharge space in parallel with the optical axis and in each case consist of a conductor (12) surrounded by a dielectric shell (11);
2) a control unit, by means of which, during the operation of the gas laser,
a) the main cathode and the main anode are connected to potentials which are different in such a manner that between them an electric discharge, the main discharge, takes place,
b) the auxiliary electrodes are connected to such potentials that a discharge pre-ionizing the gas of the main discharge space emanates from them; characterized in that
3) a) the auxiliary electrodes namely at least one auxiliary cathode (7, 8) and at least one auxiliary anode (9 and 10), respectively, are brought close to one another in such a manner and during the operation of the gas laser are connected to potentials which are different from one another in such a manner that a corona discharge occurs between these two auxiliary electrodes,
b) the auxiliary electrodes (7, 9 and 8, 10) located in each case on one of the two open sides of the main discharge space have a common dielectric shell (16, 17).

**2.** Gas laser according to Claim 1, characterized in that the auxiliary cathodes (7, 8) are electrically connected to one and the auxiliary anodes (9, 10) are electrically connected to the other one of the two main electrodes (3, 4).

**3.** Gas laser according to one of Claims 1 to 2, characterized in that in each case at least one auxiliary electrode pair formed of an auxiliary anode (9, 10) and an auxiliary cathode (7, 8) is located in the area of the two open sides of the main discharge space.

**4.** Gas laser according to one of Claims 1 to 3, characterized in that the common dielectric shell (16, 17) has a concave profile on its side facing the main discharge space.

**5.** Gas laser according to one of Claims 1 to 4, characterized in that the auxiliary electrodes (7, 8, 9, 10) are integrated into the sidewall of the discharge chamber (1).

**6.** Gas laser according to one of Claims 1 to 5, characterized in that the individual auxiliary electrodes (7, 9, 8, 10) are alternatingly used as auxiliary cathode or auxiliary anode, respectively, when there are several auxiliary electrode pairs in the area of one of the two open sides of the main discharge space.

**7.** Gas laser according to one of Claims 1 to 6, characterized in that the auxiliary electrodes (7, 8, 9,10) are in each case directly electrically connected to one of the main electrodes (3, 4).

**8.** Gas laser according to one of Claims 1 to 7, characterized in that it contains at least two adjacently located main electrode pairs, in that in each case at least one auxiliary electrode pair is arranged between two adjacent main electrode pairs (3', 4', and 3", 4"), and in that this pair is used for the pre-ionization of the gas of both main discharge spaces.

**9.** Gas laser according to one of Claims 1 to 8, characterized in that the main electrodes (3, 4) are formed and arranged in mirror symmetry to one another with respect to a first plane and the auxiliary electrodes (7, 8, 9, 10) are formed and arranged in mirror symmetry to one another with respect to a second plane perpendicular to the first plane.

**Revendications**

1. Laser à gaz à excitation transversale, notamment laser TEA, contenant

   1) une chambre allongée de décharge (1) remplie par un gaz, comportant

   a) deux éléments optiques de terminaison, qui sont situés sur les deux faces frontales de la chambre, sur un axe optique commun, l'axe optique (2),

   b) deux électrodes disposées à l'intérieur de la chambre, à savoir une cathode principale (3) et une anode principale (4), qui s'étendent le long de l'axe optique, et ce de telle sorte que cet axe traverse l'espace où s'effectue la décharge principale entre la cathode principale et l'anode principale,

   c) au moins deux électrodes auxiliaires (7 à 10), qui sont disposées à l'intérieur de la chambre, s'étendent au voisinage au moins de l'un des deux côtés ouverts de l'espace où s'effectue la décharge principale, parallèlement à l'axe optique, et sont constitués chacun par un conducteur (12) entouré par une enveloppe diélectrique (11);

   2) une unité de commande, à l'aide de laquelle lors du fonctionnement du laser à gaz

   a) la cathode principale et l'anode principale sont placées à des potentiels qui diffèrent de telle sorte qu'il se produit entre cette cathode et cette anode une décharge électrique, à savoir la décharge principale,

   b) les électrodes auxiliaires sont placées à des potentiels tels qu'à partir de ces électrodes se produit une décharge réalisant une préionisation du gaz de l'espace où s'effectue la décharge principale; caractérisé par le fait que

   3) a) les électrodes auxiliaires, à savoir au moins une cathode auxiliaire (7,8) et au moins une anode auxiliaire (9 ou 10), sont rapprochées l'une de l'autre à un point tel et sont, lors du fonctionnement du laser à gaz, placées à des potentiels qui diffèrent l'un de l'autre de telle sorte qu'il se produit une décharge par effet couronne entre ces deux électrodes auxiliaires,

   b) les électrodes auxiliaires (7,9 et 8,10), situées respectivement sur l'un des deux côtés ouverts de l'espace où s'effectue la décharge principale, possèdent une enveloppe diélectrique commune (16,17).

2. Laser à gaz suivant la revendication 1, caractérisé par le fait que les cathodes auxiliaires (7,8) sont reliées électriquement à l'une des deux électrodes principales (3,4) et que les cathodes auxiliaires (9,10) sont reliées électriquement à l'autre des deux électrodes principales (3,4).

3. Laser à gaz suivant l'une des revendications 1 à 2, caractérisé par le fait que respectivement au moins un couple d'électrodes auxiliaires, formé par une anode auxiliaire (9,10) et par une cathode auxiliaire (7,8), est situé au voisinage des deux côtés ouverts de l'espace où s'effectue la décharge principale.

4. Laser à gaz suivant l'une des revendications 1 à 3, caractérisé par le fait que l'enveloppe diélectrique commune (16,10) possède un profil concave sur sa face tournée vers l'espace où s'effectue la décharge principale.

5. Laser à gaz suivant l'une des revendications 1 à 4, caractérisé par le fait que les électrodes auxiliaires (7, 8,9,10) sont intégrées dans la paroi latérale de la chambre de décharge (1).

6. Laser à gaz suivant l'une des revendications 1 à 5, caractérisé par le fait que, lorsque plusieurs couples d'électrodes auxiliaires sont présents au voisinage de l'un des deux côtés ouverts de l'espace où s'effectue la décharge principale, les électrodes auxiliaires individuelles (7,9,8, 10) sont utilisées en alternance en tant que cathode auxiliaire et anode auxiliaire.

7. Laser à gaz suivant l'une des revendications 1 à 6, caractérisé par le fait que les électrodes auxiliaires (7, 8,9,10) sont respectivement reliées électriquement directement à l'une des électrodes principales (3,4).

8. Laser à gaz suivant l'une des revendications 1 à 7, caractérisé par le fait qu'il contient au moins deux couples, disposés côteà-côte, d'électrodes principales, que respectivement au moins un couple d'électrodes auxiliaires est disposé entre deux couples voisins d'électrodes principales (3',4 et 3",4") et que ce couple est utilisé pour réaliser la préionisation du gaz des deux espaces où s'effectue la décharge principale.

9. Laser suivant l'une des revendications 1 à 8, caractérisé par le fait que les électrodes principales (3,4) sont symétriques l'une de l'autre par rapport à un premier plan et que les électrodes auxiliaires (7,8,9,10) sont conformées et disposées symétriquement par rapport à un second plan perpendiculaire au premier plan.

FIG 1

FIG 2

FIG 3

FIG 4